# EUROPEAN PATENT APPLICATION

(11) **EP 2 051 116 A2**
(43) Date of publication of application: **22.04.2009**
(21) Application number: 08450084.2
(22) Date of filing: 28.05.2008
(51) Int. Cl.: G02B 6/08, G03B 21/60

(54) **Large area display device comprising a plurality of sub display devices**

(30) Priority: 28.05.2007 KR 20070051304
(71) Applicant: Seamless Imaging Systems, Inc., Englewood Cliffs, NJ 07632 (US)
(72) Inventor: Kim, Dae II, Closter NJ, 07632 (US)
(74) Representative: Sonn & Partner Patentanwälte

(57) **Abstract**

Disclosed is a display device (1) including an image source unit (100) shaped like a plate to form an image; and an image magnifying unit (200) including a plurality of plate-shaped light transfer members (210) each extended in a first direction and arrayed in a second direction transverse to the first direction; the longitudinal direction of each light transfer member is parallel with a surface of the image source unit (100), and the height direction is transverse to the surface of the image source unit and includes a plurality of cutting parts (214) arrayed in the longitudinal direction and form a plurality of light guide channels (215). With this configuration, there is provided a display device which can reduce a problem that a joint is distinctive to a user's eye.

## Description

### CROSS-REFERENCE TO RELATED APPLICATION

This application claims priority from Korean Patent Application No. 10-2007-0051304, filed on May 28, 2007 in the Korean Intellectual Property Office, the disclosure of which is incorporated herein by reference.

### BACKGROUND OF INVENTION

### Field of Invention

Apparatuses and methods consistent with the present invention relate to a display device, and more particularly, to a display device capable of forming a large-sized screen through a plurality of sub display devices.

### Description of the Related Art

A display device with a large-sized screen has recently been used in many public places for a performance, an exhibition, outdoor advertising, etc.

As examples of the display device with the large-sized screen, there are a projection display, a plasma display, a liquid crystal display (LCD), and an LED display board that forms the large-sized screen with light emitting diodes (LED).

Among them, the projection display could not produce a clear image and a wide viewing angle.

Further, in the case that the projection displays serve as a plurality of sub-display devices and are connected to form the large-sized screen, a joint between the sub-display devices is distinctive to a user's eyes.

In the case of the plasma display and the liquid crystal display, products having a size of 100 inches (254cm) or more have recently come out. However, it is a question whether the plasma display and the liquid crystal display are economical if they get larger, and it is hard to transport.

In the LED display board using the LEDs, the LEDs are molded with a resin material or arrayed on a supporting body at regular intervals, and thus such modularized LEDs are attached like a tile. The LED display board is easy to form the large-sized screen, but it is expensive and consumes much power. Further, since an individual light emitting diode is used as a cell or a pixel, there is a limit to realize a high resolution.

Also, the LED display board is difficult to have a pixel pitch of 4mm or below even though a relatively small surface mount device (SMD) type is selected among the kinds of LED.

As described above, it is not easy to produce a large-sized display larger than 100 inches (254cm) or more in the form of a single plate. Further, if the large-sized display is produced by connecting the sub display devices, the joint between the sub display devices is distinctive to a user's eyes.

### SUMMARY OF THE INVENTION

Accordingly, it is an aspect of the present invention to provide a display device which can reduce a problem that a joint is distinctive to a user's eye.

The foregoing and/or other aspects of the present invention can be achieved by providing a display device including an image source unit shaped like a plate to form an image; and an image magnifying unit including a plurality of light transfer members each extended in a first direction and arrayed in a second direction transverse to the first direction, each light transfer member is shaped like a plate, of which a longitudinal direction is parallel with a surface of the image source unit and a height direction is transverse to the surface of the image source, and includes a plurality of cutting parts arrayed in the longitudinal direction and form a plurality of light guide channels.

The longitudinal length of each light transfer member may get longer as far away from the image source unit.

The plurality of light transfer member may include a first part facing the image source unit and a second part opposite to the first part, and the second part may have a cross section larger than that of the first part.

The neighboring first parts may be connected together, and the neighboring second parts may be connected together.

Each light transfer member may have a curved longitudinal end part.

The light guide channel of each light transfer member may be formed in a row along the first direction.

At least some of the light transfer members may further include an auxiliary cutting part positioned within the light guide channel.

The second part may have a curved surface.

The light guide channel may be extended long and may have a cross section that becomes larger as far away from the image source unit.

The light transfer member may include at least one selected from groups consisting of transparent polymer and glass.

The display device may further include a first coating layer formed on a surface of the light guide channel contacting the cutting parts, and preventing light from leaking from the light guide channel.

The first coating layer may have a smaller refractive index than the light transfer member.

The display device may further include a spacer interposed between the adjacent light transfer members.

The spacer may be transparent and have a smaller refractive index than the light transfer member

The image source unit may include at least one of a liquid crystal display (LCD) panel, a plasma display panel (PDP), an organic light emitting diode (OLED), a projection display, etc.

The display device may further include: a light source placed behind the image source unit; a cover surrounding the image source unit so that light travels from the light source toward the image source, the image source unit including a liquid crystal display (LCD) panel.

The light source may emit light with higher brightness intensity to edges than a center of the image magnifying unit.

The light source may be arranged more densely corresponding to the edge of the image magnifying unit.

The display device may further include a diffusion coating layer formed on an inner surface of the cover and contains fine powder.

The image source unit may include a plurality of pixels, and each pixel may correspond to at least one light guide channel.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a perspective view of a display device according to a first exemplary embodiment of the present invention;
FIG. 2 is an exploded perspective view of a sub display device in the display device according to the first exemplary embodiment of the present invention;
FIG. 3 is an enlarged view of a part A in FIG. 2;
FIG. 4 is a front view of a light transfer member in the display device according to the first exemplary embodiment of the present invention;
FIG. 5 is an enlarged view of a part B in FIG. 4;
FIG. 6 is a lateral view of an image magnifying unit in the display device according to the first exemplary embodiment of the present invention;
FIG. 7 shows a light input surface of the image magnifying unit in the display device according to the first exemplary embodiment of the present invention;
FIG. 8 shows a light output surface of the image magnifying unit in the display device according to the first exemplary embodiment of the present invention;
FIG. 9 is a view for explaining a light travel in the display device according to the first exemplary embodiment of the present invention;
FIG. 10 is a front view of a light transfer member in a display device according to a second exemplary embodiment of the present invention;
FIG. 11 is a front view of a light transfer member in a display device according to a third exemplary embodiment of the present invention;
FIG. 12 is a front view of a light transfer member in a display device according to a fourth exemplary embodiment of the present invention;
FIG. 13 is a front view of a light transfer member in a display device according to a fifth exemplary embodiment of the present invention;
FIG. 14 is an enlarged view of a part C in FIG. 13;
FIG. 15 is a front view of a light transfer member in a display device according to a sixth exemplary embodiment of the present invention;
FIG. 16 is a front view of a light transfer member in a display device according to a seventh exemplary embodiment of the present invention;
FIG. 17 is a view for explaining a light guide channel in the display device according to the seventh exemplary embodiment of the present invention;
FIG. 18 is a cross-sectional view of a display device according to an eighth exemplary embodiment of the present invention;
FIG. 19 is an enlarged view of a part D in FIG. 18;
FIGs. 20A and 20B are views for explaining a display device according to a ninth exemplary embodiment of the present invention; and
FIGs. 21A and 21B are views for explaining a display device according to a tenth exemplary embodiment of the present invention.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The embodiments are described below so as to explain the present invention by referring to the figures.

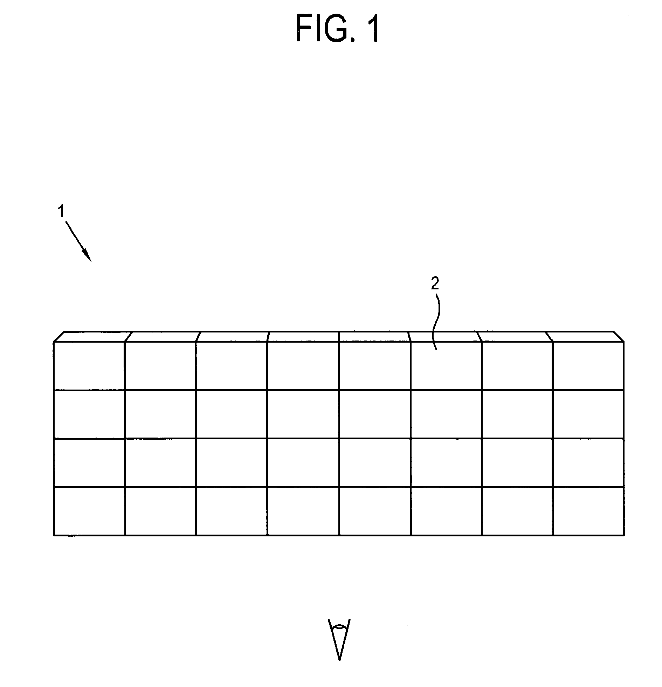

FIG. 1 is a perspective view of a display device according to a first exemplary embodiment of the present invention.

A display device 1 typically includes the same thirty two sub-display devices 2. The sub-display devices 2 are arrayed in the form of a matrix of 4*8. Each light output surface of the sub display devices 2 is disposed on the same plane, so that the display device 1 can have a large-sized screen.

Alternatively, the number and the array of sub display devices 2 may be changed variously.

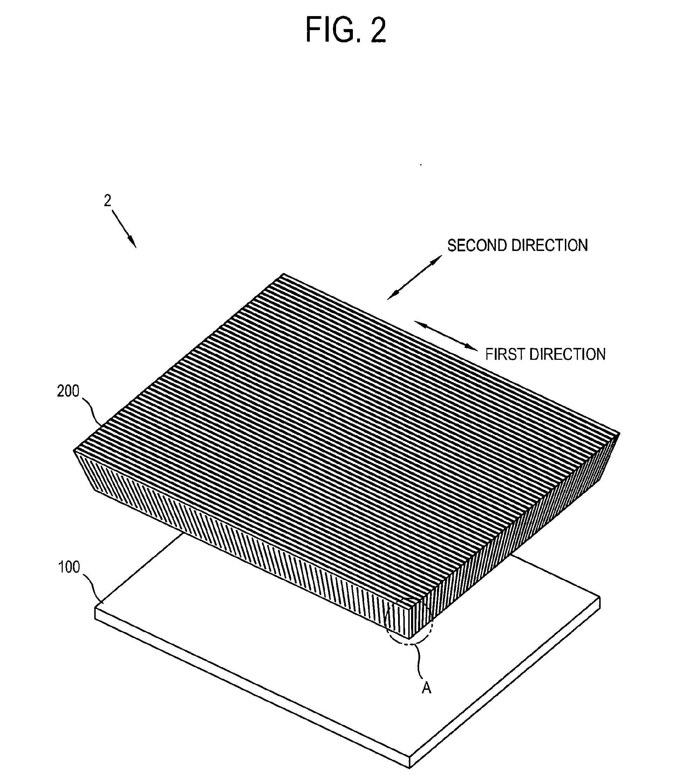

The sub-display device 2 will be described with reference to FIGs. 2 through 6.

Referring to FIG. 2, the sub-display device 2 includes an image source unit 100 and an image magnifying unit 200.

In the first exemplary embodiment, the image source unit 100 has a plate shape and is a self-emissive display device such as a plasma display panel (PDP), an organic light emitting diode (OLED) or a projection display.

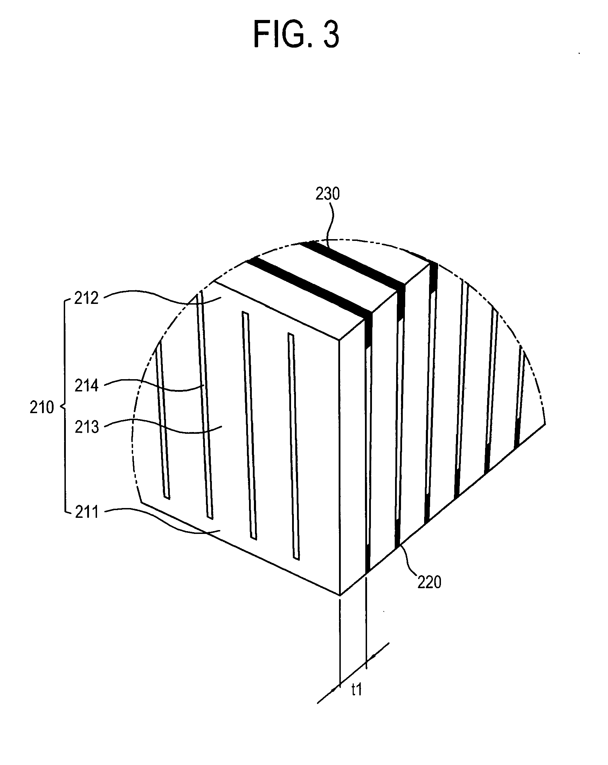

Referring to FIG. 3, the image magnifying unit 200 includes a plurality of light transfer members 210, and spacers 220 and 230.

Each light transfer member 210 is shaped like a plate that extends in a first direction, and the light transfer members 210 are paralleled in a second direction. Here, the first direction is parallel with both upper and lower sides of the image source unit 100 facing each other, and the second direction is parallel with both left and right sides of the image source unit 100 facing each other. The image source unit 100 is approximately rectangular, and thus the first and second directions are orthogonal to each other.

In the first exemplary embodiment, the light transfer member 210 has a constant thickness t1.

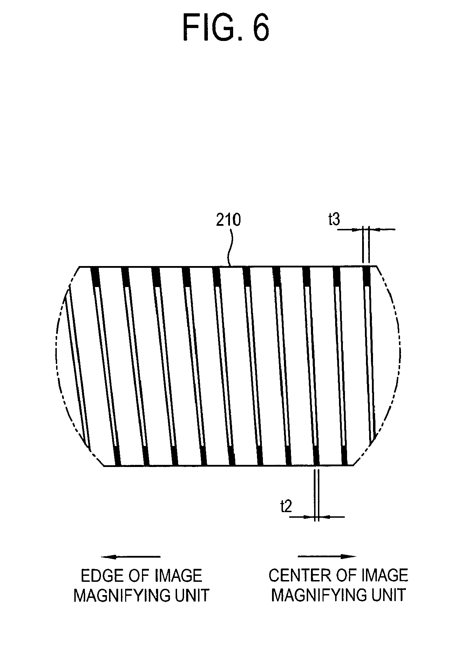

A height direction of the light transfer member 210 is approximately perpendicular to a surface of the image source unit 100. In more detail, the light transfer member 210 is perpendicular to the surface of the image source unit 100 at the center of the image source unit 100, but oriented down gradually in outward directions as the distance is getting far away from the center of the image source unit 100 (refer to FIG. 6). The reason why the light transfer member 210 lies down in outward directions bit by bit is because such light transfer members 210 can make a screen larger than the image source unit 100.

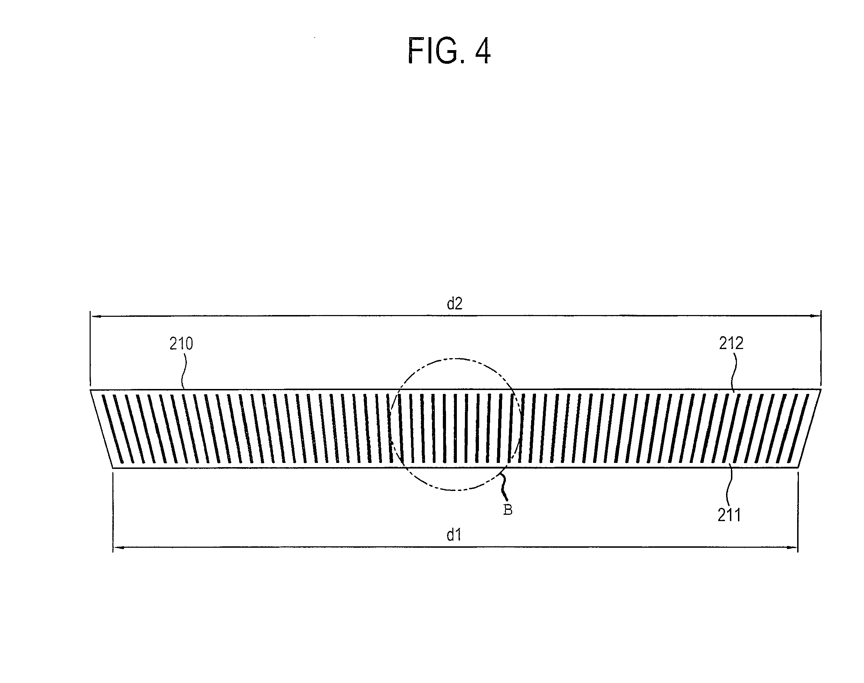

Referring to FIGs. 3 and 4, the light transfer member 210 is shaped like a trapezium, of which a first part 211 corresponding to a light input surface has a length d1 shorter than a length d2 of a second part 212 corresponding to a light output surface. Thus, the larger screen size of the light output surface than the image source unit 100 is achieved through the assembling of the light transfer member 210.

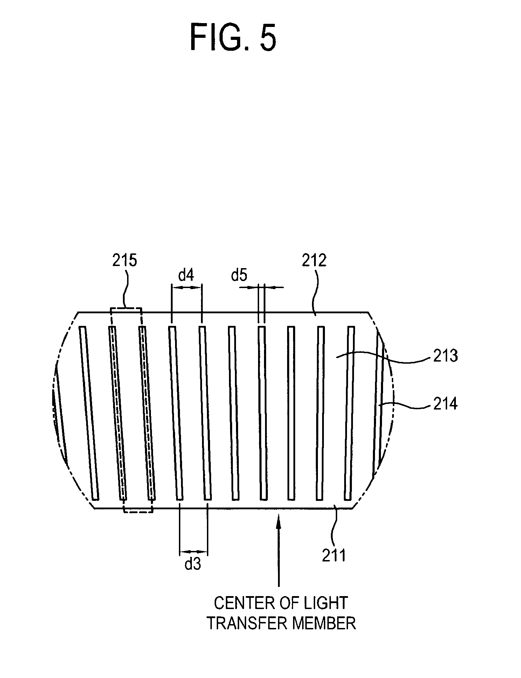

Referring to FIG. 5, the light transfer member 210 includes the first part 211, the second part 212, a third part 213, and a cutting (cut) part 214.

The first part 211 faces the image source unit 100, and the neighboring first parts 211 are connected together. The second part 212 is opposite to the first part 211, and the neighboring second parts 212 are also connected together. The third part 213 connects the first part 211 and the second part 211 together, and the neighboring third parts 231 are separated from each other by the cutting part 214.

Each first part 211 has a uniform width d3, and each second part 212 has a uniform width d4. Here, the width d4 of the second part 212 is a little larger than the width d3 of the first part 211.

Most of light transfer occurs in the third part 213. The third part 213 is elongated and has a very low surface roughness to prevent the light escaping from the body of the light part 213 to the cutting part 214.

The first part 211, the second part 212 and the third part 213 are connected together to form a light guide channel 215. Substantially, the neighboring light guide channels 215 are optically separated from each other.

The light guide channels 215 lie down gradually in outward directions as the distance is getting far away from the center of the light transfer member 210

The cutting part 214 is formed along the height direction of the light transfer member 210. The cutting parts 214 are approximately arrayed at regular internal, and each have a uniform width d5. The cutting part 214 is formed all the way through the light transfer member 210 in a thickness direction.

The light transfer member 210 is made of transparent polymer or glass. The transparent polymer includes polymethylmethacrylate (PMMA), polycarbonate (PC), etc.

Below, the spacer 220, 230 will be described with reference to FIGs. 3 and 6.

Referring to FIG. 3, the spacers 220, 230 are extended along the first direction. The spacer 220, 230 serves to settle the light transfer member 210, and may be made of an adhesive material.

Alternatively, the spacer 220, 230 may be made of a non-adhesive material or a material having insufficient adhesion, and an additional adhesive layer may be provided between the spacer 220, 230 and the light transfer member 210. In this case, the spacer 220, 230 may be made of a black material.

In the case that the spacer 220,230 is made of the adhesive material, the spacer 220, 230 is transparent and has a smaller refractive index than the light transfer member 210. In this case, the spacer 220, 230 induces total internal reflection, thereby effectively preventing light leakage. Further, since there is no additional adhesive layer, it is possible to reduce the thickness of the spacer 220, 230. If the thickness of the light transfer member 210 increases as much as the reduced thickness of the spacer 220, 230, an aperture ratio is increased. The spacer 220, 230 includes a first spacer 220 placed between the neighboring first parts 211, and a second spacer 230 placed between the neighboring second parts 212.

Referring to FIG. 6, a thickness t2 of the first spacer 220 is smaller than a thickness t3 of the second spacer 230. Thus, a gap between the neighboring second parts 212 is larger than that between the neighboring first parts 211, so that the light transfer member 210 lies down in an outward direction. The light transfer member 210 is getting far away from the center of the image source unit 100, the more the light transfer member 210 inclines downward.

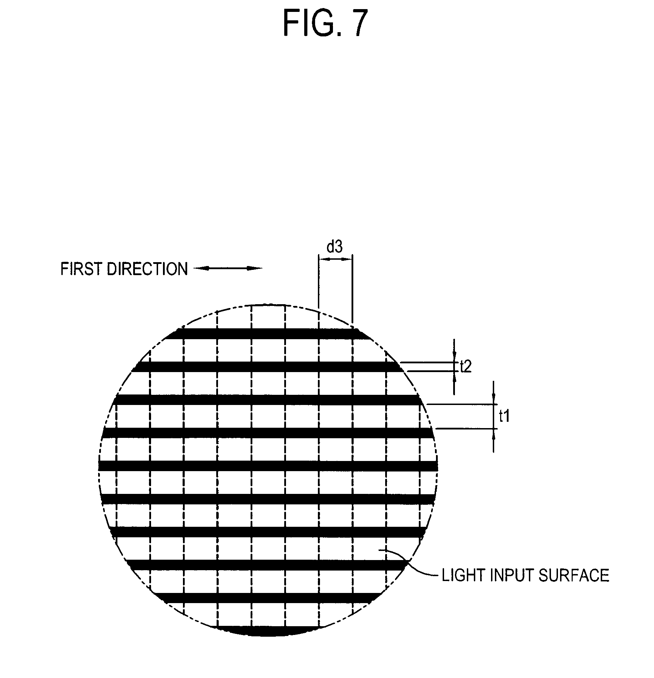

In the image magnifying unit 200 as described above, light transfer and image enlargement will be described with reference to FIGs. 7 through 9.

Referring to FIG. 7, the light input surface of the image magnifying unit 200 includes a plurality of light input surface units. The light input surface unit is rectangular, and each has the same shape and size. Each light input surface unit corresponds to the first part 211. The light input surface unit is arranged along the first direction, and the first spacer 220 is placed between the array of the light input surface units.

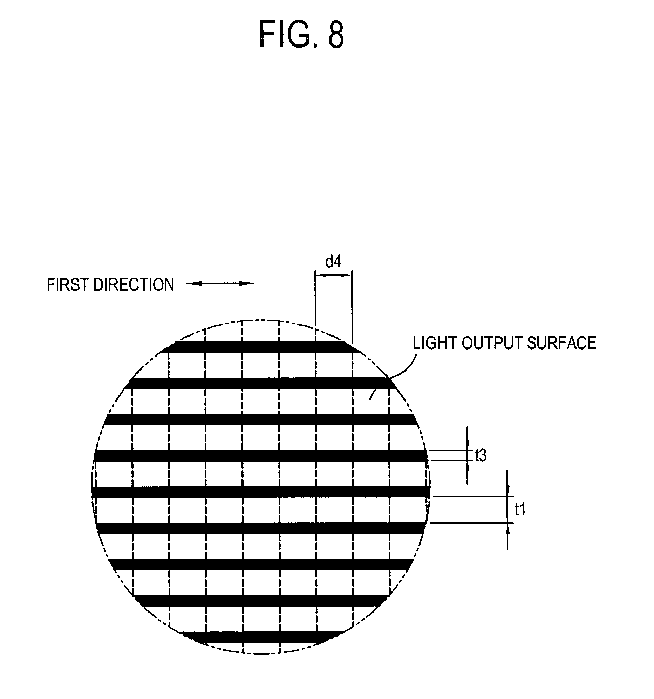

Referring to FIG. 8, the light output surface of the image magnifying unit 200 includes a plurality of light output surface units. The light output surface unit is approximately rectangular, and each has the same shape and size. Each light output surface unit corresponds to the second part 212. The light output surface unit is arranged along the first direction, and the second spacer 230 is placed between the light output surface units.

As described above, the thickness t3 of the second spacer 230 is thicker than the thickness t2 of the first spacer 220. Thus, a space in the second direction between the light output surface units is bigger than that between the light input surface units, so that an image can be enlarged.

With respect to the second direction, the light output surface unit and the light input surface unit have the same length t1 since each light transfer member 210 has the same thickness t1. However, with respect to the first direction, a length d4 of the light output surface unit is longer than a length d3 of the light input surface unit since each light transfer member 210 has a trapezoidal shape of which a light output side is longer than a light input side.

The image source unit 100 includes a plurality of pixels arrayed in the form of a matrix. According to the first exemplary embodiment of the present invention, one pixel corresponds to one light input surface unit.

Alternatively, one pixel may correspond to a plurality of light input surface units.

Further, a plurality of pixels in the image source unit 100, e.g., 4*4 pixels may correspond to one light input surface unit. It is preferable but not indispensable that there is no pixel that does not correspond to the light input surface unit. If there is a pixel that does not correspond to the light input surface unit, each sub display device 2 has a lower resolution than the image source unit 100.

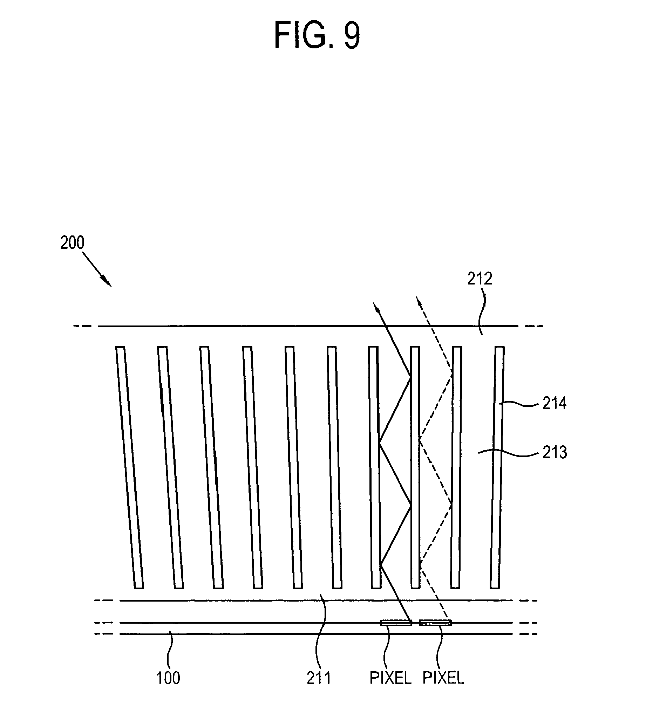

Referring to FIG. 9, light emitted from one pixel of the image source unit 100 light outputs via the first part 211, the third part 213 and the second part 212 in sequence.

The light may be mixed between the neighboring first parts 211, but the light mixture is minimized because the height of the first part 211 is relatively short. The relatively long third part 213 is surrounded with the cut part 214. Thus, the third part 213 is surrounded with air, so that it can serve as an optical fiber. That is, the light travels toward the second part 212 while repeating total internal reflection. Likewise, the light may be mixed between the neighboring second parts 212, but the light mixture is minimized since the length of the second part 212 is relatively short.

Meanwhile, a method of manufacturing the display device according to the first exemplary embodiment of the present invention is as follows.

First, a mother light transfer member is prepared. The mother light transfer member is in a state before forming the cutting part 214, so that the light guide channel 215 is not defined yet.

Then, the cutting part 214 is formed in the mother light transfer member by a laser, thereby preparing the light transfer member 210. Here, the width d5 (refer to FIG. 5) of the cutting part 214 may be about 0.1mm.

Then, the spacers 220, 230 are used to assemble the light transfer member 210, thereby completing the image enlarging unit 200.

The completed image magnifying unit 200 is aligned with and settled on the image source unit 100, thereby preparing the sub display device 2. The prepared sub display devices 2 are positioned so that edges of the light output surfaces thereof are joined together, thereby forming the display device 1 without a seam.

Alternatively, the light transfer member 210 may be formed by an injection molding or stamping method. At this time, the third part 213 may have various shapes such as a cylindrical shape instead of a rectangular column.

In the first exemplary embodiment, the configurations of the light transfer member 210 and the spacers 220, 230 may be changed variously.

Alternatively, the first spacer 220 may not be provided. In this case, the neighboring first parts 211 directly contact with each other.

Further, the thickness of the light transfer member 210 may not be uniform. In other words, the thickness of the light transfer member 210 may increase along the height direction thereof. In this case, the first spacer 220 and the second spacer 230 may have the same thickness, but the light output surface unit is larger than the light input surface unit with respect to both transverse and longitudinal directions.

Also, the width of the cutting part 214 may increase along the height direction of the light transfer member 210.

The light guide channels 215 of the light transfer member 210 may be provided in two or more rows along the first direction.

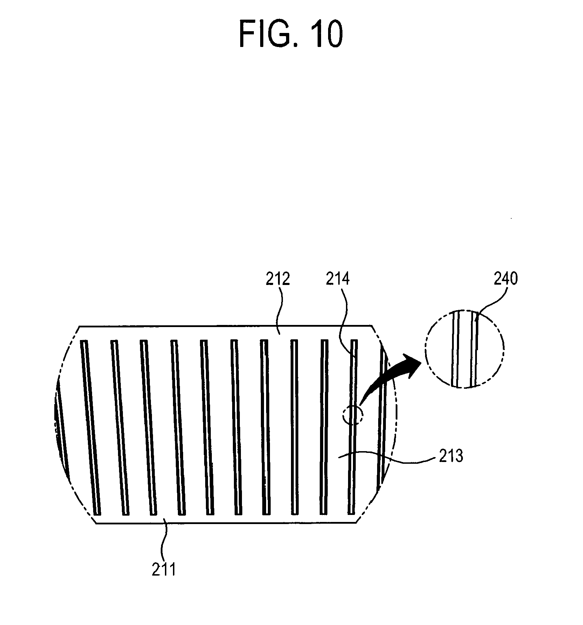

Below, a second exemplary embodiment of the present invention will be described with reference to FIG. 10.

According to the second exemplary embodiment of the present invention, the third part 213 is formed with a coating layer 240.

The coating layer 240 prevents light from leaking from the light guide channel 215 while the light travels from the first part 211 to the second part 212.

The coating layer 240 may include a material having a smaller refractive index than the light transfer member 210, thereby causing the total internal reflection. If polymethylmethacrylate (PMMA) having a refractive index of 1.492 is used as the light transfer member 210, fluorinated polymer having an refractive index of 1.417 may used as the coating layer 240.

Alternatively, a metal material having high reflectivity may be used as the coating layer 240. If the metal material having the high reflectivity is used as the coating layer 240, it takes a similar effect to the total internal reflection. Here, the metal material may include aluminum, chrome or nickel.

Alternatively, fluorinated polymer may be used as the coating layer 240, and a black or gray coating layer may be additionally formed on the coating layer 240. Such an additional coating layer further suppresses a crosstalk between the light guide channels 215, thereby enhancing a contrast ratio of the display device 1. The additional coating layer may be provided as black paint.

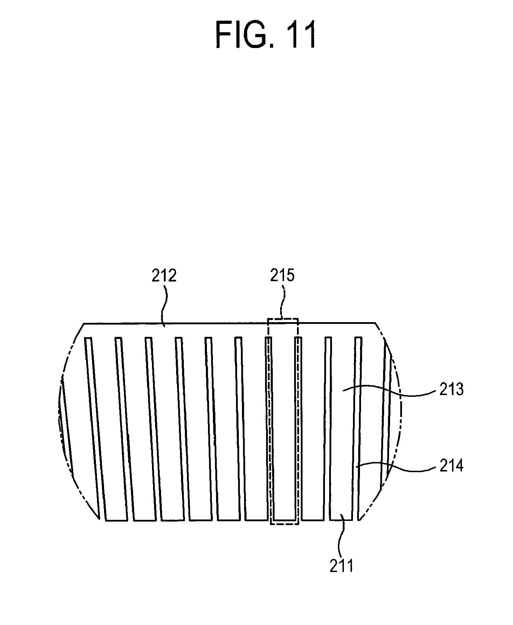

A third exemplary embodiment of the present invention will be described with reference to FIG. 11.

As shown in FIG. 11, the first parts 211 facing the image source unit 100 are separated from each other. In this embodiment, optical isolation between the neighboring light guide channels 215 is improved.

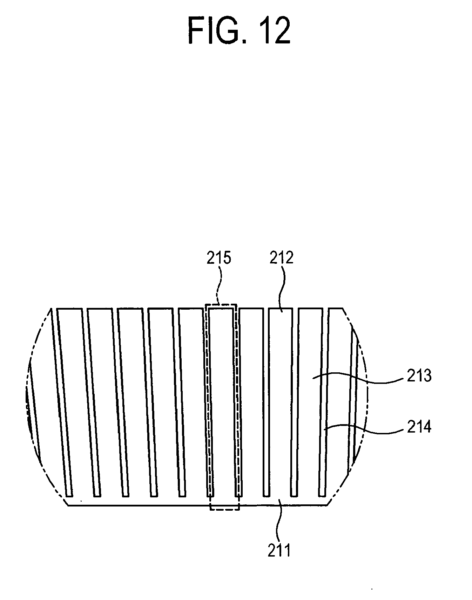

A fourth exemplary embodiment of the present invention will be described with reference to FIG. 12.

As shown in FIG. 12, the second parts 212 are separated from each other. In this embodiment, optical isolation between the neighboring light guide channels 215 is enhanced.

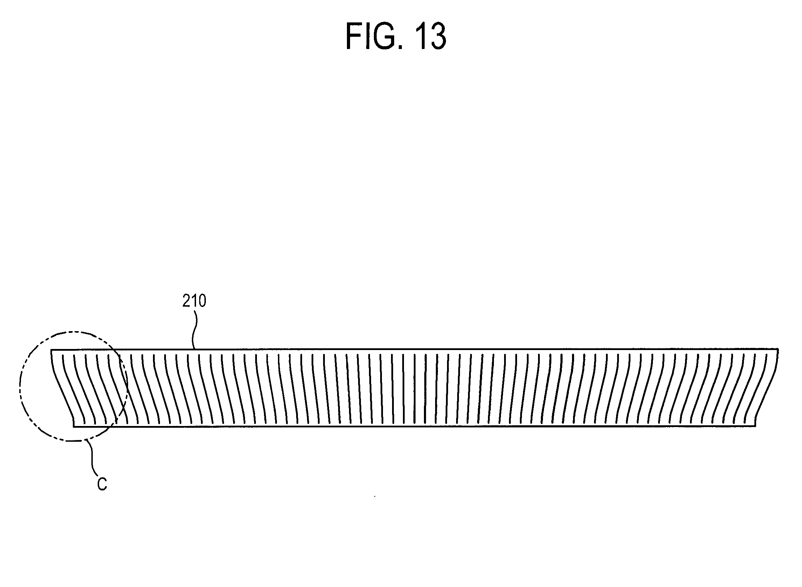

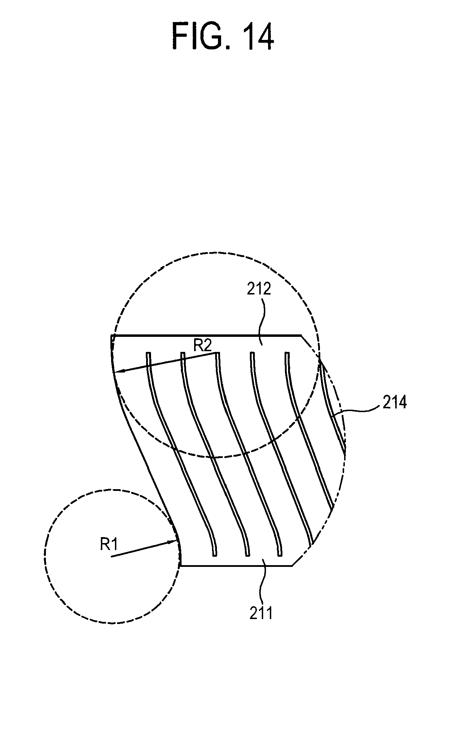

A fifth exemplary embodiment of the present invention will be described with reference to FIGs. 13 and 14.

Both right and left end sides of the light transfer member 210 have a curved shape. For example, each side forms a part of curves having a radius R1 and a radius R2. In the light guide channels 215 positioned at both right and left end sides of the light transfer member 210, the light from the image source unit 100 is diagonally light input to the third part 213, so that it is adverse to the total internal reflection.

The total internal reflection occurs when a light input angle is larger than a critical angle when the light propagates a boundary of two materials having different refractive indexes. However, in both the right and left end sides of the light transfer member 210 where the light suddenly changes in direction, the light input angle becomes smaller, so that it is adverse to the total internal reflection.

Thus, the light guide channel 215 located in both right and left end sides of the light transfer member 210 is curved to make the light input angle larger, thereby facilitating the total internal reflection.

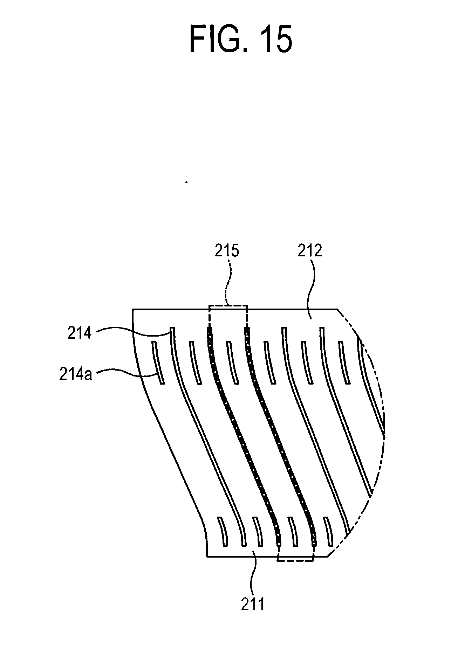

A sixth exemplary embodiment of the present invention will be described with reference to FIG. 15.

The opposite sides of the light transfer member 210 have a curved shape. Each light guide channel 215 is provided with an auxiliary cutting part 214a. The auxiliary cutting part 214a is adjacent to the first and second parts 211 and 212, i.e., placed in a curved part.

The auxiliary cutting part 214a divides the light guide channel 215 in the curved part, thereby reducing a cross-sectional area of the light guide channel 215. Thus, the total internal reflection is enhanced.

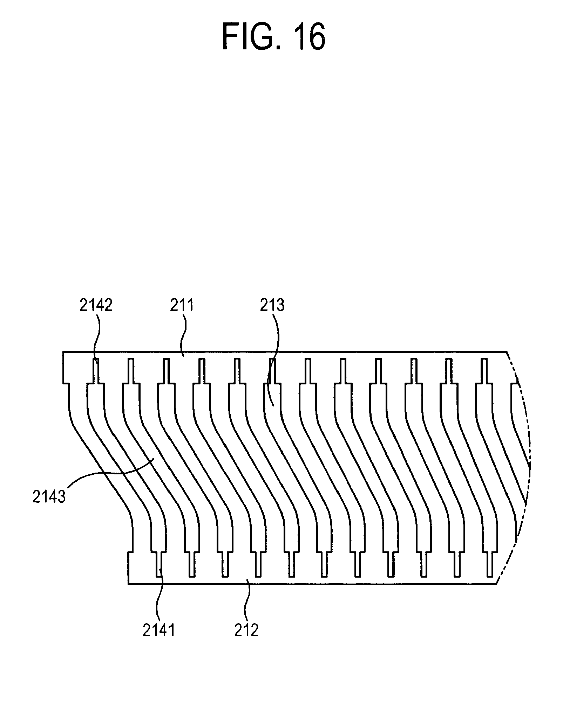

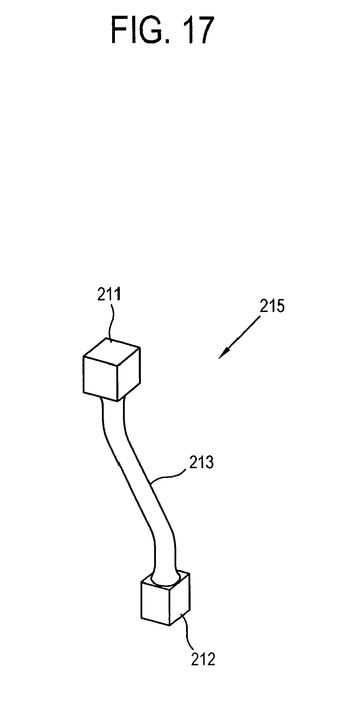

A seventh exemplary embodiment of the present invention will be described with reference to FIGs. 16 and 17. The cutting part 214 includes a first cutting part 2141 for dividing the first parts 211, a second cutting part 2142 for dividing the second parts 212, and a third cutting part 2143 connecting the first and second cutting parts 2141 and 2142.

The third cutting part 2143 has a width larger than those of the first and second cutting parts 2141 and 2142. The first cutting part 2141 and the second cutting part 2142 are formed to make the first and second parts 211 and 212 have a rectangular parallelepiped shape. The third cutting part 2143 is formed to make the third part 213 has a circular cross-section.

In the seventh exemplary embodiment, the light transfer member 210 may be formed by an injection molding or stamping method.

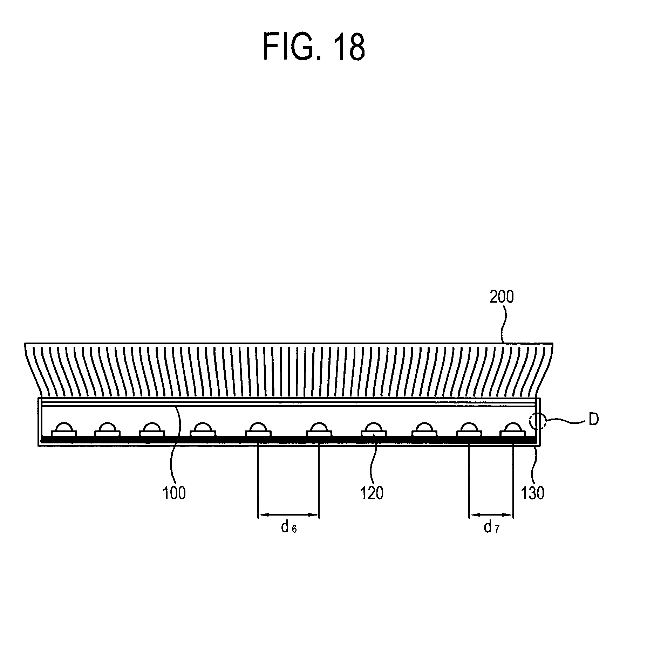

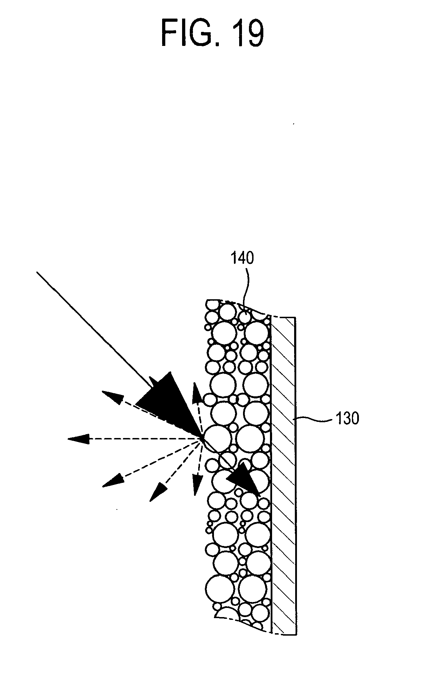

An eighth exemplary embodiment of the present invention will be described with reference to FIGs. 18 and 19.

In this embodiment, the image source unit 100 is a liquid crystal display (LCD) panel. Since the LCD panel is non emissive device, a light source 120 is provided behind the image source unit 100. In FIG. 18, a light emitting diode is used as the light source 120, but not limited thereto. The light source 120 may include a cold cathode fluorescent lamp, an external electrode fluorescent lamp, a flat lamp, etc.

The light source 120 is provided more densely in an edge area than the center area of the image magnifying unit 200. For example, a distance d6 between the light sources 120 in the center of the image magnifying unit 200 is longer than a distance d7 between the light sources 120 in the edge of the image magnifying unit 200. FIG. 18 shows the light sources 120 only in the first direction. Likewise, the light sources 120 are more densely provided in the edge area than the center area of the image magnifying unit 200 in the second direction.

The light guide channels 215 corresponding to the edge of the image magnifying unit 200 is relatively long and curved, so that light may partially leak from the light guide channels 215. The light leakage decreases brightness of the corresponding light output surface. Thus, as shown in FIG. 18, when the light sources 120 are densely provided in the edge area of the image unit 200, the brightness of the corresponding part increases, thereby allowing the light output surface of the image magnifying unit 200 to have uniform brightness.

Alternatively, the light sources 120 may be arranged at regular intervals, and the light sources 120 corresponding to the edge area of the image magnifying unit 200 may emit light with relatively high brightness intensity.

A cover 130 surrounds the light source 120, and reflects and diffuses the light input light from the light source 120 toward the image source unit 100.

The inner surface of the cover 130 forms an mirror surface, and specular-reflects the light input light. Further, a diffusion coating layer 140 is formed on the inner surface of the cover 130. The diffusion coating layer 140 may include several µm-sized white powder such as silica or titanium oxide (TiO₂). Alternatively, the inner surface of the cover 130 does not form the mirror surface, and the diffusion coating layer 140 may be formed on the inner surface of the cover 130 which is not the mirror surface.

Some of light input to the cover 130 directly collide with the white powder of the diffusion coating layer 140 and this is diffused toward the image magnifying unit 200. Others of light input to the cover 130 directly collide with the internal surface of the cover 130 and is recycled. Thus, the emitted light from the light source 200 is efficiently supplied to the image magnifying unit 200 with minimized light loss.

Alternatively, the internal surface of the cover 130 may have a rough surface by sandblasting or etching a metallic surface having a high reflectivity. Further, metallic paint containing a relatively large silver or chrome particle of more than several µm may be applied to the internal surface of the cover 130.

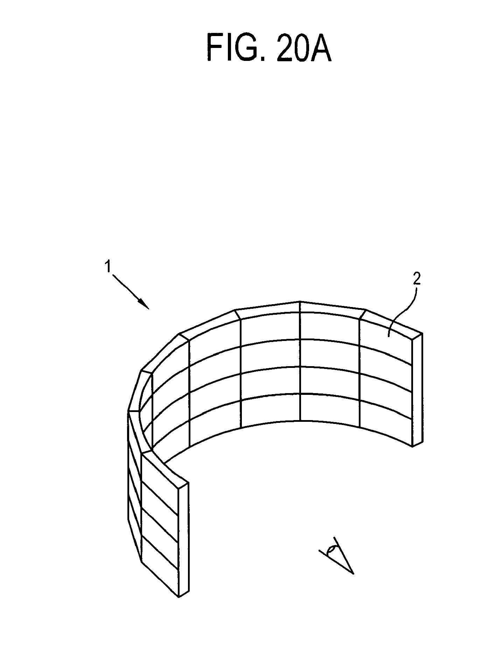

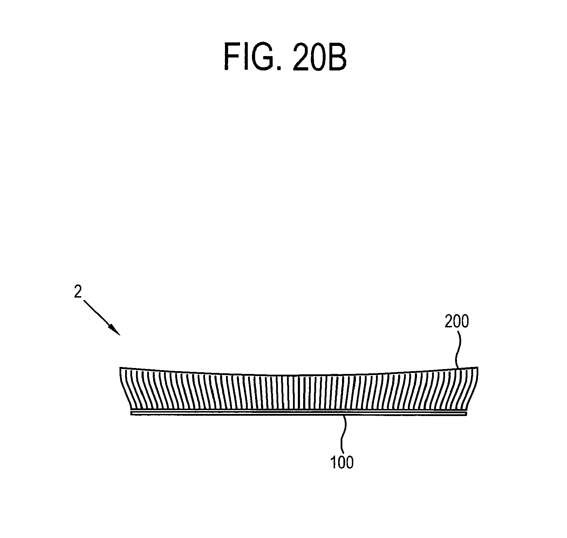

A ninth embodiment of the present invention will be described with reference to FIGs. 20A and 20B.

The display device 1 is a concave screen facing toward a user. In each of the sub display devices 2, the height of the image magnifying unit 200 is low in a middle part but high in both the right and left end sides thereof. That is, the light transfer member 210 according to the ninth exemplary embodiment of the present invention has a concaved light output surface.

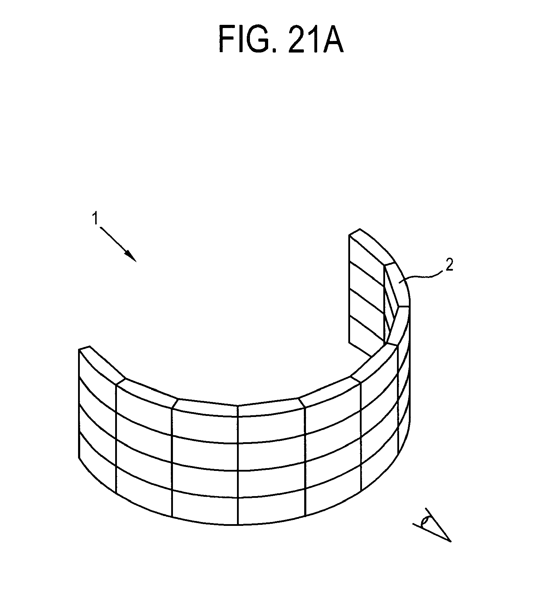

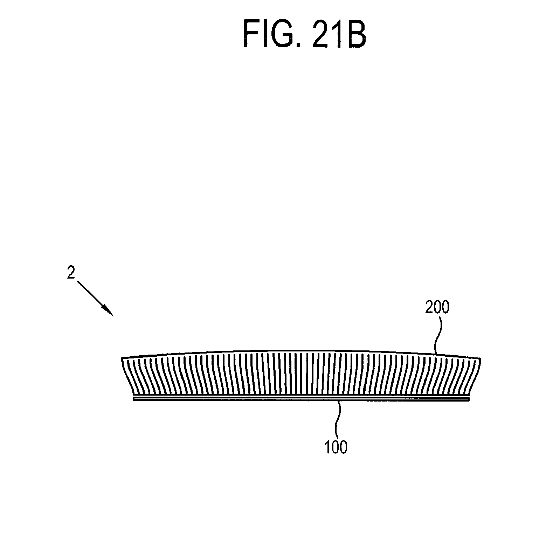

A tenth embodiment of the present invention will be described with reference to FIGs. 21A and 21B.

The display device 1 is bent like a convex screen facing toward a direction opposite to a user. In each of the height of the sub display devices 2, the image magnifying unit 200 is high in a middle part but low in both right and left end sides thereof. That is, the light transfer member 210 according to the tenth exemplary embodiment of the present invention has a convex light output surface.

As described above, the present invention provides a display device which can reduce a problem that a joint is distinctive to a user's eye.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A display device (1) comprising
an image source unit (100) shaped like a plate to form an image; and
an image magnifying unit (200) comprising a plurality of light transfer members (210) each extended in a first direction and arrayed in a second direction transverse to the first direction,
each light transfer member (210) being shaped like a plate, of which a longitudinal direction is parallel with a surface of the image source unit (100) and a height direction is transverse to the surface of the image source, and comprises a plurality of cutting parts (214) arrayed in the longitudinal direction and form a plurality of light guide channels (215).

2. The display device according to claim 1, wherein the longitudinal length of each light transfer member (210) gets longer as far away from the image source unit (100).

3. The display device according to claim 1 or 2, wherein the plurality of light transfer members (210) comprises a first part (211) facing the image source unit and a second part (212) opposite to the first part, and
the second part has a cross section larger than that of the first part.

4. The display device according to claim 3, wherein the neighboring first parts are connected together, and the neighboring second parts are connected together.

5. The display device according to anyone of claims 1 to 4, wherein each light guide channel (215) is curved.

6. The display device according to anyone of claims 1 to 5, wherein the light guide channels of each light transfer member are formed in a row along the first direction.

7. The display device according to claim 3 or 4, wherein the second part has a curved surface.

8. The display device according to anyone of claims 1 to 7, wherein the light guide channels (215) are extended longitudinally and have a cross section that becomes larger as far away from the image source unit.

9. The display device according to anyone of claims 1 to 8, wherein the light transfer member comprises at least one selected from groups consisting of transparent polymer and glass.

10. The display device according to anyone of claims 1 to 9, further comprising a first coating layer (240) formed on a surface of the light guide channel (215) contacting the cutting parts (214), and preventing light from leaking from the light guide channel.

11. The display device according to claim 10, wherein the first coating layer (240) has a smaller refractive index than the light transfer member.

12. The display device according to anyone of claims 1 to 11, further comprising a spacer (220, 230) interposed between the adjacent light transfer members (210).

13. The display device according to claim 12, wherein the spacer is transparent and has a smaller refractive index than the light transfer member

14. The display device according to anyone of claims 1 to 13, further comprising:
a light source (120) placed behind the image source unit (100);
a cover (130) surrounding the image source unit so that light travels from the light source toward the image source,
the image source unit comprising a liquid crystal display (LCD) panel.

15. The display device according to anyone of claims 1 to 14, wherein the image source unit comprises a plurality of pixels, and
each pixel corresponds to at least one light guide channel (215).
